(19) **Europäisches Patentamt / European Patent Office / Office européen des brevets**

(11) **EP 2 212 132 B1**

(12) **EUROPEAN PATENT SPECIFICATION**

(45) Date of publication and mention
of the grant of the patent:
**18.04.2012 Bulletin 2012/16**

(51) Int Cl.:
**B60G 17/015** (2006.01)　　**B60G 17/052** (2006.01)
**F16F 9/02** (2006.01)

(21) Application number: **08842804.0**

(22) Date of filing: **23.10.2008**

(86) International application number:
**PCT/SE2008/051201**

(87) International publication number:
**WO 2009/054797 (30.04.2009 Gazette 2009/18)**

(54) **METHOD FOR ESTIMATING AN AMOUNT OF COMPRESSED AIR SUPPLIED TO AN AIR BELLOWS IN A VEHICLE**

VERFAHREN ZUR SCHÄTZUNG EINER EINEM LUFTBALG IN EINEM FAHRZEUG ZUGEFÜHRTEN DRUCKLUFTMENGE

PROCEDE PERMETTANT D'ESTIMER UNE QUANTITE D'AIR COMPRIME ALIMENTEE A UN SOUFFLET PNEUMATIQUE DANS UN VEHICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.10.2007　SE 0702376**

(43) Date of publication of application:
**04.08.2010　Bulletin 2010/31**

(73) Proprietor: **Scania CV AB (publ)**
**151 87 Södertälje (SE)**

(72) Inventor: **STAVAEUS, Mikael**
**S-126 39 Hägersten (SE)**

(56) References cited:
**EP-A1- 1 844 961　　DE-A1-102005 045 269**
**DE-A1-102005 045 270　　US-A1- 2007 241 487**
**US-B2- 6 845 988**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION AND PRIOR ART

The present invention relates to a method for estimating an amount of compressed air supplied to an air bellows which forms part of an air suspension system of a vehicle. The invention relates also to a computer programme product comprising data programme codes for implementing a method according to the invention, and an electronic control unit.

Good fuel economy is currently an important competition factor in the field of heavy motor vehicles, and manufacturers of heavy motor vehicles endeavour constantly to minimise the fuel consumption of motor vehicles of this kind. The compressor which is powered by the vehicle engine to deliver compressed air inter alia to the brake system and the air suspension system of a heavy motor vehicle is one of many factors which contribute to fuel consumption. Reducing the consumption of compressed air of a motor vehicle makes it possible to reduce the amount of fuel needed for powering the compressor, resulting in a reduction in the fuel consumption of the vehicle. For this reason, development work is currently being conducted to make it possible to minimise the compressed air consumption of heavy vehicles. As the air suspension system is a large consumer of compressed air of a heavy motor vehicle, the compressed air consumption of the air suspension system is of particular relevance in this context. Gaining a comprehensive understanding of the factors which affect the compressed air consumption of a heavy motor vehicle and hence making measures directed towards minimising the compressed air consumption possible would involve measuring and gathering operating data concerning the compressed air consumption of a large number of motor vehicles. However, the flowmeters usable for measuring the compressed air consumption in a motor vehicle are at present very expensive, so for cost reasons it is not possible for a vehicle manufacturer to equip the motor vehicles it releases to the market with such flowmeters. The work of minimising the compressed air consumption of heavy motor vehicles, which is important with regard to the environment and fuel economy, is thus hampered.

DE10 2005 045 269A, EP1 844 961A, DE10 2005 045 270A, US6845988 and US2007/0241487 are relevant documents disclosing methods for calculating the mass of the compressed air used in a vehicle pneumatic system. Such methods are cost-effective. However, the accuracy of the results obtained by these mathematical methods needs to be improved since they do not take into account the variation of the cross-sectional area of the bellows in response to variation in the bellows height.

### OBJECT OF THE INVENTION

The object of the present invention is to provide a simple and cost-effective way of estimating accurately the magnitude of an amount of compressed air supplied to an air bellows in an air suspension system.

### SUMMARY OF THE INVENTION

According to the present invention, said object is achieved with a method having the features indicated in claim 1.

The method according to the invention calculates the magnitude of an amount of compressed air supplied to an air bellows by means of a computing model on the basis of the measured value representing the bellows height of the air bellows and the measured value representing the bellows pressure of the air bellows, whereby, when an increase in the bellows height of the air bellows is detected while the bellows pressure of the air bellows is kept substantially constant, the magnitude of an amount of compressed air supplied to the air bellows is calculated on the basis of information about the increase in the bellows height and a given relationship between the bellows height and the air mass accommodated in the air bellows at the prevailing bellows pressure. The solution according to the invention thus makes it possible to estimate the magnitude of an amount of compressed air supplied to an air bellows and hence the compressed air consumption of the air bellows without using an expensive flowmeter. Information about the bellows height and the bellows pressure of the air bellows which form part of an air suspension system is at present already recorded in many modem types of heavy motor vehicles and is thus often already available in most newly produced heavy motor vehicles such as trucks, tractor units and buses, which means that the method according to the invention can be implemented in such motor vehicles easily and at low cost with use of already existing equipment.

Advantageous embodiments of the method according to the invention are indicated by the dependent claims and the description set out below.

The invention relates also to a computer programme product having the features defined in claim 4.

Advantageous embodiments of the computer programme product according to the invention are indicated by the dependent claims and the description set out below.

The invention relates further to an electronic control unit having the features defined in claim 8.

### BRIEF DESCRIPTION OF THE DRAWINGS

The invention is described in more detail below on the basis of embodiment examples with reference to the attached drawings, in which:

Fig. 1      is a skeleton diagram of a system for implementing a method according to the present invention,

Figs. 2a-b    are schematic illustrations of an air bellows which forms part of an air suspension system of a vehicle during a change in the bellows height,

Fig. 3    is a diagram illustrating the relationship between bellows height and the air mass accommodated in said air bellows at a given bellows pressure and a given temperature,

Figs. 4a-c    are schematic illustrations of said air bellows at the time of a change in the bellows pressure,

Fig. 5    is a diagram illustrating the relationship between bellows pressure and the air mass accommodated in said air bellows at a given bellows height and a given temperature,

Fig. 6    is a skeleton diagram of an electronic control unit for implementing the method according to the invention, and

Fig. 7    is a flowchart illustrating a method according to an embodiment of the present invention.

DETAILED DESCRIPTION OF PREFERRED EMBODIMENTS

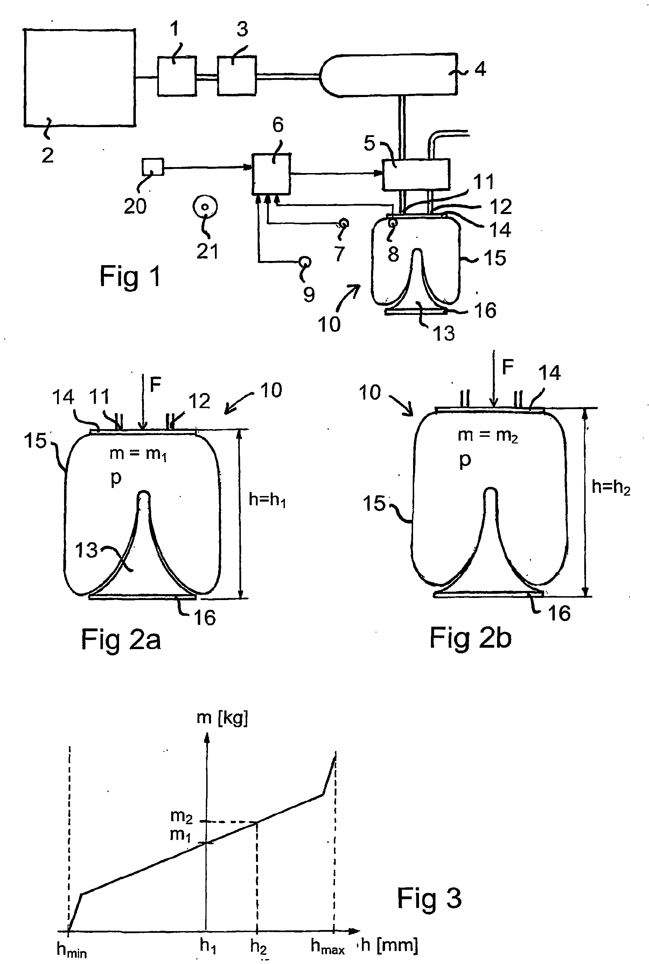

Fig. 1 illustrates schematically components which form part of or cooperate with an air suspension system of a motor vehicle. A compressor 1 is connected to the vehicle's combustion engine 2 to generate compressed air during operation of the combustion engine. The compressor 1 generates compressed air for the vehicle's air suspension system and for other systems and functions of the vehicle which require compressed air. The compressor 1 is connected via an air dryer 3 to one or more compressed air containers 4 to generate compressed air in the respective compressed air container(s) 4. A valve (not depicted in Fig. 1) is usually arranged in or immediately after the air dryer 3 to distribute the compressed air generated to the various compressed air circuits of the vehicle. The vehicle's air suspension system comprises a number of air bellows 10, only one of which is illustrated in Fig. 1. Each air bellows 10 comprises a combined inlet/outlet 11 for feeding compressed air into the air bellows and feeding compressed air out from the air bellows. The inlet/outlet 11 of the air bellows is connectable via a regulating valve 5 to a compressed container 4 to make it possible to receive compressed air from the latter. The inlet/outlet 11 of the air bellows is also connectable via the regulating valve 5 to the surroundings. Alternatively, the air bellows 10 might be provided with separate inlet and outlet connectable respectively to the compressed air container and the surroundings via their respective regulating valves. The regulating valve 5 is controlled by an electronic control unit 6 in a conventional manner on the basis of a number of variables including the bellows height h and the bellows pressure p of the air bellows 10.

The air bellows 10 illustrated in the drawings is of conventional configuration and comprises a support 13, a top plate 14 and a bellows 15 which is fastened to, and extends between, the support 13 and the top plate 14 and is made of flexible material. In the example illustrated, the inlet/outlet 11 of the air bellows is arranged in the top plate 14. The bellows height h may for example be defined as the distance between the top plate 14 and the base 16 of the support, as illustrated in, for example, Fig. 2a. The bellows 15 can be caused to rise relative to the support 13 by feeding compressed air into the bellows 15 via the inlet/outlet 11, thereby increasing the distance between the top plate 14 and the base 16 of the support and hence the bellows height h. The bellows 15 can be caused to sink relative to the support 13 by allowing air to flow out from the bellows 15 via the inlet/outlet 11, thereby reducing the distance between the top plate 14 and the base 16 of the support and hence the bellows height h.

In this description and the claims set out below, the "bellows pressure" of an air bellows means the relative air pressure which prevails within the bellows 15 of the air bellows, i.e. the air pressure in the air bellows relative to the prevailing atmospheric pressure.

Each air bellows 10 is arranged between a wheelshaft of the vehicle and the vehicle's chassis frame to support the chassis frame relative to the wheelshaft. When the vehicle is in motion, the air bellows 10 serve as shock absorbers. The air bellows 10 may also be used for regulating the height of the vehicle's chassis frame, e.g. during loading or unloading or when a semitrailer is to be coupled to or uncoupled from a tractor unit.

The bellows height h of the air bellows 10 may for example be measured by means of a level sensor 7 adapted to detecting variations in the distance between the vehicle's s chassis frame and the wheelshaft pertaining to the air bellows. The bellows pressure p of the air bellows 10 is measured by means of a pressure sensor 8. The control unit 6 is connected to said sensors 7, 8, either directly as illustrated in Fig. 1 or via another control unit of the vehicle, in order to receive measured values from them for the bellows height h and the bellows pressure p of the air bellows 10.

According to the general gas law,

$$p \cdot V = m \cdot R \cdot T$$

in which p is the bellows pressure, V the bellows volume, m the mass of the air accommodated in the air bellows, R the general gas constant for air ($R_{air}$ = 287 *Nm /(kg · K)*) and T the absolute temperature in kelvin.

The bellows volume V varies with the bellows height $h$, and the relationship between the bellows volume V and the bellows height h of a specific air bellows can easily be determined by calculations and/or empirical tests. The bellows pressure p is proportional to the load F supported by the air bellows 10 and therefore varies with the axle load on the wheelshaft pertaining to the air bellows. With unchanged axle load, the bellows pressure $p$ is therefore constant.

It follows from the general gas law that

$$m = \frac{p \cdot V}{R \cdot T}$$

which therefore means:

- 	that the variation $\Delta m$ in the air mass $m$ is proportional to the variation $\Delta V$ in the bellows volume $V$ and therefore to the variation $\Delta h$ in the bellows height $h$ at a given bellows pressure $p$ and a given temperature $T$, i.e. when there is no change in the axle load and the temperature $T$, the air mass variation $\Delta m$ is proportional to the bellows height variation $\Delta h$; and
- 	that the variation $\Delta m$ of the air mass $m$ is proportional to the variation $\Delta p$ in the bellows pressure $p$ at a given bellows volume $V$ and a given temperature $T$, i.e.. when there is no change in the bellows height $h$ and the temperature $T$, the air mass variation $\Delta m$ is proportional to the bellows pressure variation $\Delta p$.

At the very highest position and the very lowest position of the bellows 15, i.e. in the regions nearest to the maximum value and the minimum value of the bellows height $h$, the cross-sectional area of the bellows 15 changes in response to variation in the bellows height $h$, which means that the relationship between the bellows height $h$ and the bellows volume $V$ and hence the relationships indicated above between the air mass $m$ and the bellows height $h$ and between the air mass $m$ and the bellows pressure $p$ look somewhat different in these extreme states than in the region between these extreme states.

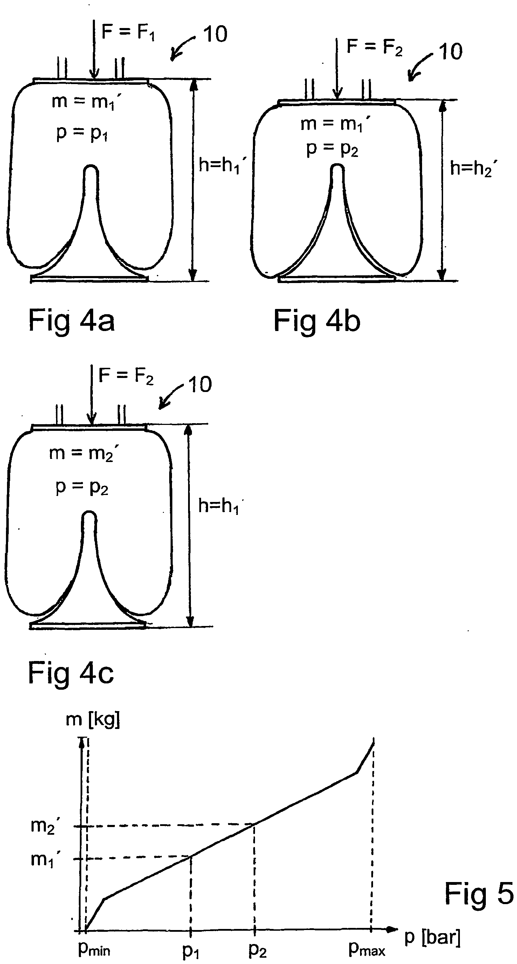

Fig. 3 is a diagram illustrating the relationship between bellows height $h$ and the air mass $m$ accommodated in the air bellows 10 according to Figs. 2a and 2b at a given bellows pressure $p$ and a given temperature $T$, and Fig. 5 is a diagram illustrating the relationship between bellows pressure $p$ of and the air mass $m$ accommodated in this air bellows at a given bellows height $h$ and a given temperature $T$.

The air bellows 10 consumes compressed air whenever an increase in the bellows height $h$ ordered via the control unit 6 is effected, since every increase in the bellows height which is not due to the load $F$ on the air bellows 10 having decreased requires a supply of compressed air to the air bellows.

An increase in the bellows height ordered by the control unit 6 may be initiated manually, e.g. by the vehicle's driver, via an operating unit 20 connected to the control unit 6 for increasing the height of the vehicle's chassis frame, e.g. to position a load space of a truck at a suitable height for loading or unloading or to position the rear end of a tractor unit at a suitable height relative to a semitrailer when the latter is to be coupled to or uncoupled from the tractor unit. Figs. 2a and 2b illustrate a change in the bellows height $h$ of the air bellows 10 from a first bellows height $h_1$ (see Fig. 2a) to a second bellows height $h_2$ (see Fig. 2b) at a time when there is no change in the load $F$ and hence in the bellows pressure $p$. This height increase is effected by a certain amount of compressed air being supplied to the air bellows 10 via the inlet/outlet 11. The amount of compressed air supplied to the air bellows 10 to effect the increase in the bellows height from $h_1$ to $h_2$ can in this case be calculated by means of a computing model on the basis of the relationship illustrated in Fig. 3 between bellows height $h$ and air mass m. The relationship means that a first air mass $m_1$ is accommodated in the air bellows at the first bellows height $h_1$ and that a second air mass $m_2$ which is greater than said first air mass $m_1$ is accommodated in the air bellows at the second bellows height $h_2$. The amount of compressed air supplied $\Delta m$ therefore corresponds to the difference between said second air mass $m_2$ and said first air mass $m_1$, i.e. $\Delta m = m_2 - m_1$.

The control unit 6 may also be set to automatically control the supply of compressed air to the air bellows 10 and the feeding-out of compressed air from the air bellows on the basis of recorded values of the bellows height $h$ and the bellows pressure $p$ in such a way that the bellows height $h$ and hence the height position of the vehicle's chassis frame are kept substantially constant. An increase in the bellows height $h$ ordered via the control unit 6 may in this case be initiated automatically by the control unit 6, e.g. by resetting the bellows height $h$ to a given value when the air bellows 10 has been pressed downwards by an increase in the load $F$ on the air bellows 10 or as a result of air having leaked out from the air bellows. Figs. 4a and 4b illustrate an increase in the load $F$ on the air bellows 10 from a first value $F_1$ to a second value $F_2$. The load increase leads to the air bellows 10 being pressed downwards so that the bellows height $h$ decreases from a given bellows height $h_1'$ (see Fig. 4a) to another bellows height $h_2'$ (see Fig. 4b) while the bellows pressure $p$ of the air bellows 10 increases from a first bellows pressure $p_1$ (see Fig. 4a) to a second bellows pressure $p_2$ (see Fig. 4b). As the control unit 6 is set to keep the bellows height $h$ at the given value $h_1'$, the control unit orders a supply of compressed air to the air bellows 10 via the inlet/outlet 11 so that the bellows height increases from the reduced bellows height $h_2'$ (see Fig. 4b) to the given bellows height $h_1'$ (see Fig. 4c) while said second bellows pressure $p_2$ is maintained. The amount of compressed air supplied to the air bellows 10 to effect the increase in the bellows height from $h_2'$ to $h_1'$ can in this case be calculated by means of a computing model on the basis of the relationship illustrated in Fig. 5 between bellows pressure $p$ and air mass $m$. The relationship means that a first air mass $m_1'$ is accommodated in the air bellows at the first bellows pressure $p_1$ and that a second air mass $m_2'$ which is larger than said first air mass air mass $m_1'$ is accommodated in the air bellows at the second bellows pressure $p_2$ when the bellows height corresponds to the given bellows height $h_1'$. The amount of compressed air supplied $\Delta m$ therefore corresponds to the difference between said second air mass $m_2'$ and said first air mass $m_1'$, i.e. $\Delta m = m_2' - m_2'$.

The amount of compressed air supplied to the air bellows 10 to effect the increase in the bellows height from $h_2'$ to $h_1'$ might alternatively, in the case illustrated in Figs. 4a-4c, be calculated by means of a computing model on the basis of the relationship illustrated in Fig. 3 between bellows height $h$ and air mass $m$, since the bellows pressure $p$ remains unchanged ($p = p_2$) during the increase in the bellows height from $h_2'$ to $h_1'$.

The calculated value of the amount of compressed air supplied to the air bellows 10 may be expressed either by weight, e.g. in kilograms, or by volume. In cases where the value is expressed by volume, it is advantageous for the volume value to be converted to standard cubic metres, which indicates the volume to which the calculated amount of compressed air should correspond at a given pressure and a given temperature.

In a simplified form of the method according to the invention, the temperature $T$ is taken as a constant which corresponds to an assumed ambient temperature value. In this case, the actual ambient temperature is therefore not taken into account in the computing model used for calculating the magnitude of the amount of compressed air supplied $\Delta m$ to the air bellows 10. In a more refined variant, however, measured values of the prevailing ambient temperature $T$ are taken into account in the computing model used for calculating the magnitude of the amount of compressed air supplied $\Delta m$ to the air bellows 10, in which case the relationship illustrated in Figs. 3 and 5 will vary with the prevailing ambient temperature T. The temperature $T$ is measured by a temperature sensor 9. The control unit 6 is connected to this sensor 9, either directly as illustrated in Fig. 1 or via another control unit of the vehicle, in order to receive from it measured values of the ambient temperature $T$ of the air bellows.

To generate a measure of the compressed air consumption of the air bellows 10 during a certain period of time, each new value of an amount of compressed air supplied $\Delta m$ to the air bellows is accumulated with the values for the amount of compressed air supplied to the air bellows 10 previously estimated during the respective period of time.

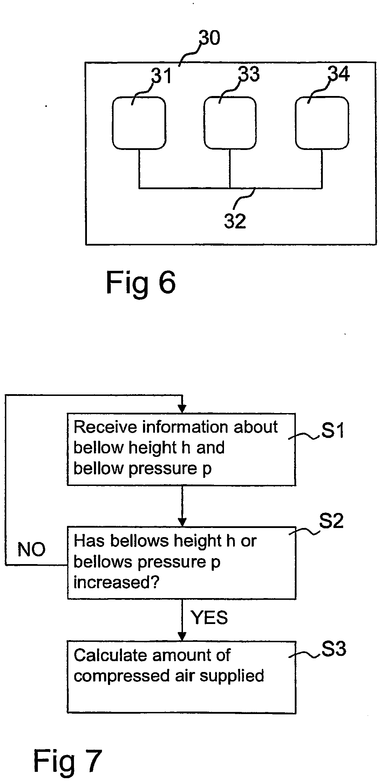

Fig. 7 is a flowchart illustrating an embodiment of a method according to the invention for estimating an amount of compressed air supplied to an air bellows forming part of an air suspension system of a vehicle. At a first step S 1, information about the bellows height $h$ and the bellows pressure $p$ of the air bellows is received. At a second step S2, there is checking to see whether an increase in the bellows height $h$ or the bellows pressure $p$ and hence a supply of compressed air to the air bellows have taken place. If the check at step S2 shows that no increase in the bellows height $h$ or the bellows pressure $p$ has taken place, steps S 1 and S2 are repeated after a certain time delay based on new information about the bellows height $h$ and the bellows pressure $p$ of the air bellows. If the check at step S2 shows that an increase in the bellows height $h$ or the bellows pressure $p$ has taken place, the magnitude of the amount of compressed air supplied $\Delta m$ to the air bellows is calculated at step S3 in the manner described above by means of a computing model on the basis of the information received about the bellows height $h$ and the bellows pressure $p$ of the air bellows.

Computer programme codes for implementing a method according to the invention are with advantage included in a computer programme which can be read into the internal memory of a computer, such as the internal memory of an electronic control unit of a vehicle, e.g. the abovementioned control unit 6 or a control unit connected to it. Such a computer programme is with advantage provided via a computer programme product 21 which comprises a data storage medium which is readable by computer and has the computer programme stored on it. Said data storage medium is for example an optical data storage medium in the form of a CD ROM disc, a DVD disc, etc., a magnetic date storage medium in the form of a hard disc, a diskette, a cassette tape etc. or a memory of the ROM, PROM, EPROM or EEPROM type or a Flash memory.

A computer programme product according to an embodiment of the invention comprises computer programme codes for causing a computer in a vehicle provided with an air suspension system which comprises air bellows:

- to generate or receive the height value which represents the bellows height $h$ of an air bellows which forms part of the air suspension system;
- to generate or receive the pressure value which represents the bellows pressure $p$ of said air bellows 10; and
- to calculate the magnitude of an amount of compressed air supplied $\Delta m$ to said air bellows 10 by means of a computing model on the basis of said height value and pressure value.

Fig. 6 illustrates very schematically an electronic control unit 30 comprising an execution means 31, e.g. a central processor unit (CPU) for executing computer software. The execution means 31 communicates with a memory 33, e.g. of the ROM type, via a databus 32. The control unit 30 comprises also a data storage medium 34, e.g. in the form of a memory of the ROM, PROM, EPROM or EEPROM type or a flash memory. The execution means 31 communicates with the data storage medium 34 via the databus 32. A computer programme comprising computer programme codes for implementing a method according to the invention is stored on the data storage medium 34.

The invention is of course in no way limited to the embodiments described above, since many possibilities for modifications thereof are likely to be obvious to a specialist in the field without thereby having to deviate from the basic concept of the invention as defined in the attached claims.

## Claims

1. A method for estimating an amount of compressed air supplied to an air bellows (10) which forms part of an air suspension system of a vehicle, whereby the magnitude of an amount of compressed air supplied ($\Delta m$) to the air bellows (10) is calculated by means of a computing model on the basis of the measured value representing the bellows height ($h$) of the air bellows (10) and the measured value representing the bellows pressure ($p$) of the air bellows (10), **characterised in that**, when an increase in the bellows height ($h$) of the air bellows (10) is detected while the bellows pressure ($p$) of the air bellows (10) is kept substantially constant, the magnitude of an amount of compressed air supplied ($\Delta m$) to the air bellows (10) is calculated on the basis of information about the increase in the bellows height ($h$) and a first predetermined relationship between the bellows height ($h$) and the air mass accommodated ($m$) in the air bellows at the prevailing bellows pressure ($p$), which takes into account the variation of the cross-sectional area of the bellows in response to the variation in the bellows height.

2. A method according to claim 1, **characterised in that**, when an increase in the bellows pressure ($p$) of the air bellows (10) is detected due to increase of vehicle load, for the bellows height ($h$) of the air bellows (10) to be kept substantially constant, the magnitude of an amount of compressed air to be supplied ($\Delta m$) to the air bellows (10) is calculate on the basis of information about the increase in the bellows pressure ($p$) and a second predetermined relationship between the bellows pressure ($p$) and the air mass accommodated ($m$) in the air bellows at the prevailing bellows height ($h$), which takes into account the variation of the cross-sectional area of the bellows in response to the variation in the bellows height.

3. A method according to claim 1 or 2, **characterised in that** the ambient temperature ($T$) is taken into account in calculating the magnitude of the amount of compressed air supplied ($\Delta m$) to the air bellows (10).

4. A computer programme product comprising computer programme codes for causing a computer in a vehicle provided with an air suspension system which comprises the air bellows:

   - to generate or receive the height value which represents the bellows height ($h$) of an air bellows which forms part of the air suspension system;
   - to generate or receive the pressure value which represents the bellows pressure ($p$) of said air bellows; and
   - to calculate the magnitude of an amount of compressed air supplied ($\Delta m$) to said air bellows (10) by means of a computing model on the basis of said height value and pressure value, **characrterised** in that, when an increase in the bellows height ($h$) of the air bellows (10) is detected while the bellows pressure ($p$) of the air bellows (10) is kept substantially constant, the magnitude of an amount of compressed air supplied ($\Delta m$) to the air bellows (10) being calculated on the basis of information about the increase in the bellows height ($h$) and a first predetermined relationship between the bellows height ($h$) and the air mass accommodated ($m$) in the air bellows at the prevailing bellows pressure ($p$), which takes into account the variation of the cross-sectional area of the bellows in response to the variation in the bellows height.

5. A computer programme product according to claim 4, **characterised in that** the computer programme product comprises computer programme codes for causing the computer to calculate the magnitude of an amount of compressed air supplied ($\Delta m$) to said air bellows (10) by means of a computing model on the basis of said height value and pressure value, by, when an increase in the bellows pressure ($p$) of the air bellows (10) is detected due to an increase of the vehicle load, for the bellows height ($h$) of the air bellows (10) to be kept substantially constant, the magnitude of an amount of compressed air supplied ($\Delta m$) to the air bellows (10) is calculated on the basis of information about the increase in the bellows pressure ($p$) and a second predetermined relationship between the bellows pressure ($p$) and the air mass accommodated ($m$) in the air bellows at the prevailing bellows height ($h$), which takes into account variation of the cross-sectional area of the bellows in response to the variation in the bellows height.

6. A computer programme product according to claim 4 or 5, **characterised in that** the computer programme product comprises computer programme codes for causing the computer:

- to generate or receive the temperature value which represents the prevailing ambient temperature ($T$), and
- to take said temperature value into account in calculating the magnitude of the amount of compressed air supplied ($\Delta m$) to the air bellows (10).

7. A computer programme product according to any one of claims 4-6, **characterised** in **that** the computer programme product comprises a data storage medium which is readable by a computer and which has said data programme codes stored on it.

8. An electronic control unit comprising an execution means (31), a memory (33) connected to the execution means, and a data storage medium (34) connected to the execution means, computer programme codes of a computer programme product according to any one of claims 4-7 being stored on said data storage medium (34).

**Patentansprüche**

1. Verfahren zum Abschätzen einer Druckluftmenge, die einem Luftbalg (10) zugeführt wurde, der einen Teil eines Luftfederungssystems eines Fahrzeugs bildet, wobei der Betrag einer dem Luftbalg (10) zugeführten Druckluftmenge ($\Delta m$) mittels eines Berechnungsmodells auf der Basis des gemessenen Werts, der die Balghöhe (h) des Luftbalgs (10) repräsentiert, und des gemessenen Werts berechnet wird, der den Balgdruck (p) des Luftbalgs (10) repräsentiert,
**dadurch gekennzeichnet, dass** dann, wenn eine Zunahme der Balghöhe (h) des Luftbalgs (10) erfasst wird, während der Balgdruck (p) des Luftbalgs (10) im Wesentlichen konstant gehalten wird, der Betrag einer dem Luftbalg (10) zugeführten Druckluftmenge ($\Delta m$) auf der Basis von Informationen über die Zunahme der Balghöhe (h) und einer ersten vorgegebenen Beziehung zwischen der Balghöhe (h) und der in dem Luftbalg zu dem vorherrschenden Balgdruck (p) aufgenommenen Luftmasse (m) berechnet wird, die die Variation der Querschnittsfläche des Balgs in Erwiderung auf die Variation der Balghöhe berücksichtigt.

2. Verfahren nach Anspruch 1,
**dadurch gekennzeichnet, dass** dann, wenn eine Zunahme des Balgdrucks (p) des Luftbalgs (10) aufgrund einer Fahrzeuglastzunahme erfasst wird, der Betrag einer dem Luftbalg (10) zuzuführenden Druckluftmenge ($\Delta m$) auf der Basis von Informationen über die Zunahme des Balgdrucks (p) und einer zweiten vorgegebenen Beziehung zwischen dem Balgdruck (p) und der in dem Luftbalg zu der vorherrschenden Balghöhe (h) aufgenommenen Luftmasse (m) berechnet wird, die die Variation der Querschnittsfläche des Balgs in Erwiderung auf die Variation der Balghöhe berücksichtigt, um die Balghöhe (h) des Luftbalgs (10) im Wesentlichen konstant zu halten.

3. Verfahren nach Anspruch 1 oder 2,
**dadurch gekennzeichnet, dass** die Umgebungstemperatur (T) beim Berechnen des Betrags der dem Luftbalg (10) zugeführten Druckluftmenge ($\Delta m$) berücksichtigt wird.

4. Computerprogrammprodukt, umfassend Computerprogrammcodes, um zu bewirken, dass ein Computer in einem Fahrzeug, das mit einem Luftfederungssystem versehen ist, das den Luftbalg umfasst:

- den Höhenwert, der die Balghöhe (h) eines Luftbalgs repräsentiert, der einen Teil des Luftfederungssystems bildet, erzeugt oder empfängt;
- den Druckwert, der den Balgdruck (p) des Luftbalgs repräsentiert, erzeugt oder empfängt; und
- den Betrag einer dem Luftbalg (10) zugeführten Druckluftmenge ($\Delta m$) mittels eines Berechnungsmodells auf der Basis des Höhenwerts und Druckwerts berechnet,

**dadurch gekennzeichnet, dass** dann, wenn eine Zunahme der Balghöhe (h) des Luftbalgs (10) erfasst wird während der Balgdruck (p) des Luftbalgs (10) im Wesentlichen konstant gehalten wird, der Betrag einer dem Luftbalg (10) zugeführten Druckluftmenge ($\Delta m$) auf der Basis von Informationen über die Zunahme der Balghöhe (h) und einer ersten vorgegebenen Beziehung zwischen der Balghöhe (h) und der in dem Luftbalg zu dem vorherrschenden Balgdruck (p) aufgenommenen Luftmasse (m) berechnet wird, die die Variation der Querschnittsfläche des Balgs in Erwiderung auf die Variation der Balghöhe berücksichtigt.

5. Computerprogrammprodukt nach Anspruch 4,
**dadurch gekennzeichnet, dass** das Computerprogrammprodukt Computerprogrammcodes umfasst, um zu bewirken, dass der Computer den Betrag einer dem Luftbalg (10) zugeführten Druckluftmenge ($\Delta m$) mittels eines Berechnungsmodells auf der Basis des Höhenwerts und Druckwerts berechnet, wobei dann, wenn eine Zunahme des Balgdrucks (p) des Luftbalgs (10) aufgrund einer Fahrzeuglastzunahme erfasst wird, der Betrag einer dem Luftbalg (10) zugeführten Druckluftmenge ($\Delta m$) auf der Basis von Informationen über die Zunahme des Balgdrucks (p) und einer zweiten vorgegebenen Beziehung zwischen dem Balgdruck (p) und der in dem Luftbalg zu der vorherrschenden Balghöhe (h) aufgenommenen Luftmasse (m) berechnet wird, die die Variation der Querschnittsfläche des Balgs in Erwiderung auf die Variation der Balghöhe berücksichtigt, um die Balghöhe (h) des Luftbalgs (10) im Wesentlichen konstant zu halten.

6. Computerprogrammprodukt nach Anspruch 4 oder 5,
   **dadurch gekennzeichnet, dass** das Computerprogrammprodukt Computerprogrammcodes umfasst, um zu bewirken, dass der Computer:

   - den Temperaturwert, der die vorherrschende Umgebungstemperatur (T) repräsentiert, erzeugt oder empfängt, und
   - den Temperaturwert beim Berechnen des Betrags der dem Luftbalg (10) zugeführten Druckluftmenge (Δm) berücksichtigt.

7. Computerprogrammprodukt nach einem der Ansprüche 4 bis 6,
   **dadurch gekennzeichnet, dass** das Computerprogrammprodukt ein Datenspeichermedium umfasst, das von einem Computer lesbar ist und auf dem die Datenprogrammcodes gespeichert sind.

8. Elektronische Steuereinheit, umfassend ein Ausführmittel (31), einen mit dem Ausführmittel verbundenen Speicher (33) und ein mit dem Ausführmittel verbundenes Datenspeichermedium (34), wobei Computerprogrammcodes eines Computerprogrammprodukts nach einem der Ansprüche 4 bis 7 auf dem Datenspeichermedium (34) gespeichert sind.

## Revendications

1. Procédé pour estimer une quantité d'air comprimé fournie à un soufflet pneumatique (10) qui fait partie d'un système de suspension pneumatique d'un véhicule, dans lequel la grandeur d'une quantité d'air comprimé (Δm) fournie au soufflet pneumatique (10) est calculée au moyen d'un modèle de calcul sur la base de la valeur mesurée représentant la hauteur de soufflet (h) du soufflet pneumatique (10) et de la valeur mesurée représentant la pression de soufflet (p) du soufflet pneumatique (10), **caractérisé en ce que**, lorsqu'un accroissement de la hauteur de soufflet (h) du soufflet pneumatique (10) est détecté pendant que la pression de soufflet (p) du soufflet pneumatique (10) est maintenue sensiblement constante, la grandeur d'une quantité d'air comprimé (Δm) fournie au soufflet pneumatique (10) est calculée sur la base d'une information concernant l'accroissement de la hauteur de soufflet (h) et d'une première relation prédéterminée entre la hauteur de soufflet (h) et la masse d'air (m) contenue dans le soufflet pneumatique à la pression de soufflet (p) actuelle, qui prend en compte la variation de l'aire de section transversale du soufflet en réponse à la variation de la hauteur du soufflet.

2. Procédé selon la revendication 1, **caractérisé en ce que**, lorsqu'un accroissement de la pression de soufflet (p) du soufflet pneumatique (10) dû à un accroissement de la charge du véhicule est détecté, pour que la hauteur de soufflet (h) du soufflet pneumatique (10) soit maintenue sensiblement constante, la grandeur d'une quantité d'air comprimé (Δm) qui doit être fournie au soufflet pneumatique (10) est calculée sur la base d'une information concernant l'accroissement de la pression de soufflet (p) et d'une seconde relation prédéterminée entre la pression de soufflet (p) et la masse d'air (m) contenue dans le soufflet pneumatique à la hauteur de soufflet (h) actuelle, qui prend en compte la variation de l'aire de section transversale du soufflet en réponse à la variation de la hauteur de soufflet.

3. Procédé selon la revendication 1 ou 2, **caractérisée en ce que** la température ambiante (T) est prise en compte dans le calcul de la grandeur de la quantité d'air comprimé (Δm) fournie au soufflet pneumatique (10).

4. Produit programme d'ordinateur comprenant des codes de programme d'ordinateur pour amener un ordinateur embarqué dans un véhicule équipé d'un système de suspension pneumatique qui comprend le soufflet pneumatique à ;

   - générer ou recevoir la valeur de hauteur qui représente la hauteur de soufflet (h) d'un soufflet pneumatique qui fait partie du système de suspension ;
   - générer ou recevoir la valeur de pression qui représente la pression de soufflet (p) dudit soufflet pneumatique ; et
   - calculer la grandeur d'une quantité d'air comprimé (Δm) fournie audit soufflet pneumatique (10) au moyen d'un modèle de calcul sur la base desdites valeur de hauteur et valeur de pression, **caractérisé en ce que**, lorsqu'un accroissement de la hauteur de soufflet (h) du soufflet pneumatique (10) est détecté pendant que la pression de soufflet (p) du soufflet pneumatique (10) est maintenue sensiblement constante, la grandeur de la quantité d'air comprimé (Δm) fournie au soufflet pneumatique (10) est calculée sur la base d'une information concernant l'accroissement de la hauteur de soufflet (h) et d'une première relation prédéterminée entre la hauteur de soufflet (*h*) et la masse d'air (*m*) contenue dans le soufflet pneumatique à la pression de soufflet (*p*) actuelle, qui prend en compte la variation de l'aire de section transversale du soufflet en réponse à la variation de la hauteur de soufflet.

5. Produit programme d'ordinateur selon la revendication 4, **caractérisé en ce que** le produit programme d'ordinateur comprend des codes de programme d'ordinateur pour amener l'ordinateur à calculer la grandeur d'une quantité d'air comprimé (Δ*m*) fournie audit soufflet pneumatique (10) au moyen d'un modèle de calcul sur la base de ladite valeur de hauteur et de ladite valeur de pression par le fait que, lorsqu'un accroissement de la pression de soufflet (*p*) du soufflet pneumatique (10) dû à un accroissement de la charge du véhicule est détecté pour que la hauteur de soufflet (*h*) du soufflet pneumatique (10) soit maintenue sensiblement constante, la grandeur d'une quantité d'air comprimé (Δ*m*) fournie au soufflet pneumatique (10) est calculée sur la base d'une information concernant l'accroissement de la pression de soufflet (*p*) et d'une seconde relation prédéterminée entre la pression de soufflet (*p*) et la masse d'air (*m*) contenue dans le soufflet pneumatique à la hauteur de soufflet (*h*) actuelle, qui prend en compte la variation de l'aire de section transversale du soufflet en réponse à la variation de la hauteur de soufflet.

6. Produit programme d'ordinateur selon la revendication 4 ou 5, **caractérisé en ce que** le produit programme d'ordinateur comprend des codes de programme d'ordinateur pour amener l'ordinateur à :

　　- générer ou recevoir la valeur de température qui représente la température ambiante (7), actuelle et
　　- prendre ladite valeur de température en compte pour calculer la grandeur de la quantité d'air comprimé (Δ*m*) fournie au soufflet pneumatique (10)

7. Produit programme d'ordinateur selon une quelconque des revendications 4 à 6, **caractérisé en ce que** le produit programme d'ordinateur comprend un support de stockage de données qui peut être lu par ordinateur et dans lequel sont stockés lesdites données codes de programme.

8. Unité de commande électronique comprenant un moyen d'exécution (31), une mémoire (33) connectée audit moyen d'exécution, et un support de stockage de données (34) connecté au moyen d'exécution, des codes de programme d'ordinateur d'un produit programme d'ordinateur selon une quelconque des revendications 4 à 7 étant stockés sur ledit support de stockage de données (34).

Fig 1

Fig 2a

Fig 2b

Fig 3

Fig 4a      Fig 4b

Fig 4c

Fig 5

Fig 6

Fig 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005045269 A
- EP 1844961 A
- DE 102005045270 A
- US 6845988 B
- US 20070241487 A